(19) **Europäisches Patentamt / European Patent Office / Office européen des brevets**

(11) **EP 2 696 078 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(51) Int Cl.:
*F04D 29/32* *(2006.01)*    *F04D 29/66* *(2006.01)*
*F01D 5/10* *(2006.01)*

(21) Anmeldenummer: **12179759.1**

(22) Anmeldetag: **09.08.2012**

(54) **Beschaufelter Rotor für eine Turbomaschine und zugehöriges Montageverfahren**

Bladed rotor for a turbomachine and corresponding assembly method

Rotor à aubage pour une turbomachine et procédé d'assemblage associé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2014 Patentblatt 2014/07**

(73) Patentinhaber: **MTU Aero Engines AG**
**80995 München (DE)**

(72) Erfinder:
• **Dr. Geppert, Johann**
**82299 Türkenfeld (DE)**
• **Dr. Eibelshäuser, Peter**
**81247 München (DE)**

(56) Entgegenhaltungen:
| | |
|---|---|
| **EP-A1- 0 785 362** | **EP-A1- 1 580 400** |
| **WO-A1-2004/111393** | **DE-A1- 2 524 555** |
| **DE-C1- 4 421 604** | **GB-A- 1 293 553** |
| **US-A- 5 026 251** | **US-A- 5 163 810** |
| **US-A- 5 306 119** | **US-A- 5 342 167** |

**Beschreibung**

Die vorliegende Erfindung betrifft einen beschaufelten Rotor für eine Gasturbine, eine Gasturbine, insbesondere ein Flugtriebwerk, mit einem oder mehreren solchen Rotoren, sowie ein Verfahren zum Beschaufeln eines solchen Rotors.

Rotoren, bei denen die Schaufeln äquidistant über dem gesamten Umfang verteilt sind, können nachteilige Nachlauf- und Aufstau-Druckverteilungen aufweisen.

Aus der EP 1 580 400 A1 ist ein Fluggasturbinenrotor mit einer Schaufelverteilung bekannt, die vier Quadranten aufweist, wobei die Schaufelzahl eines Quadranten sich von der Schaufelzahl der beiden benachbarten Quadranten unterscheidet.

Aus der WO 2004/111391 A1 ist ein Rotor für eine Gasturbine bekannt, wobei die Schaufeln des Rotors innerhalb des oder jeden Schaufelrings mit einem unterschiedlichen Abstand voneinander angeordnet sind.

Aufgabe der vorliegenden Erfindung ist es, eine verbesserte Gasturbine zur Verfügung zu stellen.

Zur Lösung dieser Aufgabe ist ein beschaufelter Rotor nach dem Oberbegriff des Anspruchs 1 durch dessen kennzeichnende Merkmale weitergebildet. Anspruch 9 stellt eine Gasturbine, insbesondere ein Flugtriebwerk, mit einem oder mehreren solchen Rotoren unter Schutz, Anspruch 10 ein Verfahren zum Beschaufeln eines solchen Rotors. Die Unteransprüche betreffen vorteilhafte Weiterbildungen.

Ein Rotor für eine Gasturbine, vorzugsweise ein Flugtriebwerk, weist wenigstens eine Stufe mit einer Mehrzahl von Schaufeln auf, die gemäß bzw. in einer Schaufelverteilung über den Umfang verteilt angeordnet sind. Unter einer Schaufelverteilung wird vorliegend insbesondere eine Anordnung bzw. ein Muster verstanden, die bzw. das die Verteilung der Schaufeln über den bzw. längs des Umfangs beschreibt bzw. bestimmt, insbesondere die Winkelabstände der Schaufeln, insbesondere ihrer Ein- und/oder Auslasskanten, insbesondere an Schaufelfuß, -mitte und/oder -spitze, zueinander.

Die Schaufelverteilung setzt sich aus einer Sektorzahl Z erster Winkelsektoren und zweiter Winkelsektoren zusammen, wobei in den ersten Winkelsektoren jeweils eine erste Schaufelzahl $N_A$ von ersten Schaufeln und in den zwischen je zwei ersten Winkelsektoren angeordneten zweiten Winkelsektoren jeweils eine hiervon verschiedene zweite Schaufelzahl $N_B$ von zweiten Schaufeln angeordnet ist. Die Winkelsektoren erstrecken sich erfindungsgemäß jeweils über einen, vorzugsweise gleichen, Winkelbereich, der sich aus 360° dividiert durch die doppelte Sektorzahl ergibt (360°/(2Z)), wobei jeweils ein erster Winkelsektor beidseitig an einen zweiten Winkelsektor anschließt und umgekehrt.

Nach einem ersten Aspekt der vorliegenden Erfindung ist die natürlichzahlige Sektorzahl Z ungerade und größer als eins (Z = 2n+1, n = 1, 2, 3, 4,...). Sie kann insbesondere gleich drei sein, so dass die ersten und zweiten Winkelsektoren jeweils 60° aufweisen bzw. betragen.

Insbesondere, wenn in einer Ausführung die erste und zweite Schaufelzahl sich um eine ungerade ganze Zahl Δ (Δ = 2n+1, n = ±1, ±2, ±3, ±4,...)., insbesondere um eins (Δ = 1) unterscheiden, wird so insgesamt eine ungerade Schaufelzahl auf dem Rotor dargestellt:

$$Z \cdot N_A + Z \cdot N_B = Z \cdot \left(N_A + N_B\right) = Z \cdot \left(N_A + N_A + \Delta\right) = \underbrace{2 \cdot Z \cdot N_A}_{gerade} + \underbrace{Z \cdot \Delta}_{ungerade}$$

Zusätzlich oder alternativ ist nach einem zweiten Aspekt der vorliegenden Erfindung die natürlichzahlige Sektorzahl Z größer als zwei (Z = 3, 4, 5, 6). Sie kann insbesondere gleich vier sein, so dass die ersten und zweiten Winkelsektoren jeweils 45° aufweisen bzw. betragen.

Die ersten Schaufeln in den ersten Winkelsektoren und die zweiten Schaufeln in den zweiten Winkelsektoren können, wenigstens im Wesentlichen, gleich sein, insbesondere jeweils, wenigstens im Wesentlichen, dieselbe Masse aufweisen. Im Vergleich zu der Schaufelverteilung mit vier Quadranten wird durch die ungerade und/oder größere Sektorzahl die Schaufelnmasse besser über den Umfang verteilt, so dass kein Massenausgleich durch mehr leichtere und weniger schwere Schaufeln notwendig ist. Die Verwendung gleicher Schaufeln erleichtert vorteilhafterweise die Lagerhaltung und Montage. Gleichermaßen können in einer Ausführung die Schaufeln der Winkelsektoren mit der größeren Schaufelzahl eine geringere oder größere Masse aufweisen als Schaufeln der Winkelsektoren mit der kleineren Schaufelzahl. Ist beispielsweise die erste Schaufelzahl, insbesondere um eins, größer als die zweite Schaufelzahl ($N_A = N_B + \Delta$ bzw. $N_A = N_B + 1$), so kann die Masse $m_A$ einer ersten Schaufel dem Produkt aus der Masse $m_A$ einer zweiten Schaufel und dem Quotienten der zweiten und der ersten Schaufelzahl entsprechen:

$$m_A = m_B \cdot \left(\frac{N_B}{N_A}\right)$$

Die ersten Schaufeln in den ersten Winkelsektoren und/oder die zweiten Schaufeln in den zweiten Winkelsektoren können, wenigstens im Wesentlichen, äquidistant verteilt sein. Zusätzlich oder alternativ kann ein Abstand $u_{12}$ zwischen einer ersten Schaufel, die in Umfangsrichtung einem zweiten Winkelsektor benachbart ist, und einer zweiten Schaufel, die dieser ersten Schaufeln in Umfangsrichtung benachbart ist, wenigstens im Wesentlichen, der Hälfte der Summe des Abstandes $u_{11}$ zwischen dieser ersten Schaufel und einer ihr in Umfangsrichtung benachbarten ersten Schaufel und des Abstandes $u_{22}$ zwischen dieser zweiten Schaufel und einer ihr in Umfangsrichtung benachbarten zweiten Schaufel entsprechen:

$$u_{12} = (u_{11} + u_{22})/2.$$

Auf diese Weise wird der Übergang zwischen benachbarten Winkelsektoren optimiert.

In einer Ausführung können die ersten und/oder zweiten Schaufeln integral mit einer Nabe ausgebildet sein.

Weitere Vorteile und Merkmale ergeben sich aus den Unteransprüchen und den Ausführungsbeispielen. Hierzu zeigt, teilweise schematisiert:

Fig. 1: einen beschaufelten Rotor einer Flugtriebwerk-Gasturbine nach einer Ausführung der vorliegenden Erfindung in einer axialen Draufsicht; und

Fig. 2A-D: ein A/F-Verhältnis eines Rotors mit äquidistant über dem gesamten Umfang verteilten Schaufeln (Fig. 2A), eines Rotors mit vier Winkelsektoren (Fig. 2B), des Rotors nach Fig. 1 (Fig. 2C) bzw. eines Rotors nach einer weiteren Ausführung der vorliegenden Erfindung mit acht Winkelsektoren (Fig. 2D).

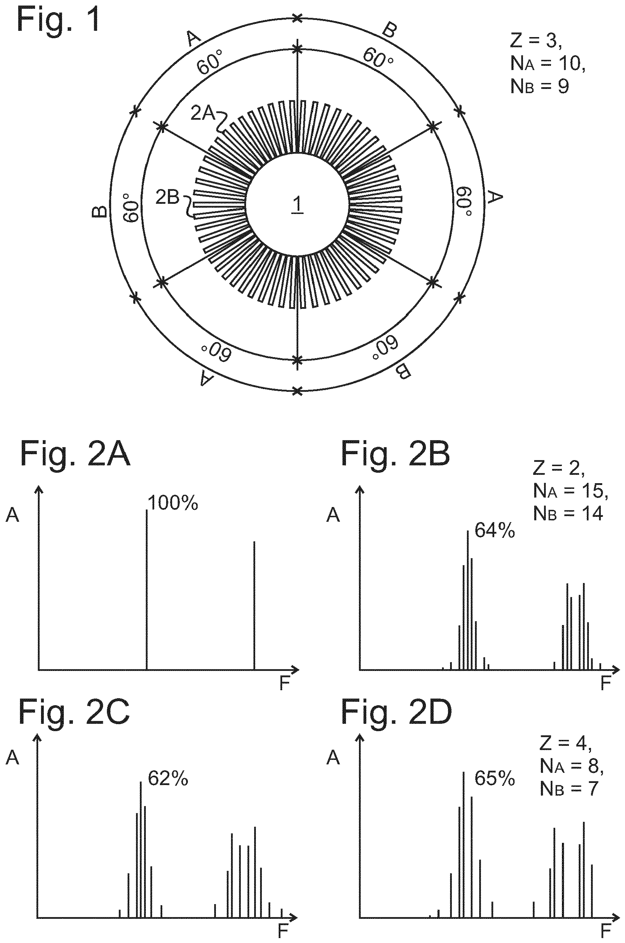

Fig. 1 zeigt in einer axialen Draufsicht einen beschaufelten Rotor einer Flugtriebwerk-Gasturbine nach einer Ausführung der vorliegenden Erfindung.

Der Rotor weist eine Nabe 1 auf, über dessen Umfang Schaufeln 2A, 2B verteilt angeordnet, insbesondere integral mit der Nabe 1 ausgebildet, sind.

Die Schaufelverteilung setzt sich aus drei ersten Winkelsektoren A und drei zweiten Winkelsektoren B zusammen und weist somit eine Sektorzahl Z = 3 auf, die Winkelsektoren weisen entsprechend jeweils 60° auf.

In den ersten Winkelsektoren A sind jeweils zehn erste Schaufeln 2A äquidistant zueinander verteilt, die ersten Winkelsektoren A weisen somit eine erste Schaufelzahl $N_A = 10$ auf.

In den zwischen je zwei ersten Winkelsektoren A angeordneten zweiten Winkelsektoren B sind jeweils neun zweite Schaufeln 2B äquidistant zueinander verteilt, die zweiten Winkelsektoren B weisen somit eine zweite Schaufelzahl $N_B = 9$ auf.

Die ersten Schaufeln 2A in den ersten Winkelsektoren A und die zweiten Schaufeln 2B in den zweiten Winkelsektoren B sind, insbesondere bezüglich ihrer Massen, gleich. Der Abstand zwischen den sektoräußeren, dem benachbarten zweiten Winkelsektor benachbarten ersten Schaufeln und den diesen ersten Schaufeln jeweils benachbarten sektoräußeren zweiten Schaufeln entspricht der Hälfte der Summe des Abstandes zwischen diesen sektoräußeren ersten Schaufeln und ihren benachbarten sektorzweitäußeren ersten Schaufel und des Abstandes zwischen diesen sektoräußeren zweiten Schaufeln und ihren benachbarten sektorzweitäußeren zweiten Schaufeln.

Fig. 2A zeigt als Referenz ein A(mplituden)/F(requenz)-Verhältnis für einen Rotor mit 58 äquidistant über dem gesamten Umfang verteilten Schaufeln, wobei der Maximalwert als 100% normiert bzw. skaliert ist.

Fig. 2B zeigt im Vergleich das A/F-Verhältnis eines Rotors mit vier Winkelsektoren mit je 14 bzw. 15, d.h. insgesamt ebenfalls 58 Schaufeln, Fig. 2C das A/F-Verhältnis für den vorstehend beschriebenen erfindungsgemäßen Rotor der Fig. 1 mit $3 \times 10 + 3 \times 9 = 57$ Schaufeln. Fig. 2D zeigt das A/F-Verhältnis für einen Rotor nach einer weiteren Ausführung der vorliegenden Erfindung mit acht Winkelsektoren, d.h. einer Sektorzahl gleich vier (Z = 4), dessen Winkelsektoren jeweils 45° aufweisen, wobei in den ersten Winkelsektoren jeweils acht erste Schaufeln äquidistant zueinander verteilt sind, die ersten Winkelsektoren somit eine erste Schaufelzahl $N_A = 8$ aufweisen, und in den zwischen je zwei ersten Winkelsektoren angeordneten zweiten Winkelsektoren jeweils sieben den ersten Schaufeln gleichen zweite Schaufeln äquidistant zueinander verteilt, die zweiten Winkelsektoren B somit eine zweite Schaufelzahl $N_B = 7$ aufweisen, d.h. insgesamt 60 Schaufeln.

Man erkennt, dass der Maximalwert sich bei einem Rotor mit vier Winkelsektoren (Fig. 2B) auf 64% des Referenzwertes für einen Rotor mit äquidistant über dem gesamten Umfang verteilten Schaufeln (Fig. 2A) reduziert.

Durch eine Schaufelverteilung gemäß Fig. 1 kann demgegenüber nochmals eine Reduzierung auf 62% erreicht werden (Fig. 2C).

Bei einer Schaufelverteilung mit einer Sektorzahl von vier erhöht sich demgegenüber der Maximalwert wieder auf 65% (Fig. 2D), ist jedoch gegenüber der Referenz eines Rotors mit äquidistant über dem gesamten Umfang verteilten Schaufeln (Fig. 2A) ebenfalls signifikant reduziert. Durch die größere Sektorzahl können jedoch die ersten und zweiten Schaufeln bei einer Sektorzahl von vier vorteilhafterweise gleich sein, ohne dass hierdurch größere Unwuchten auftreten wie dies bei einer Sektorzahl von zwei, d.h. vier Quadranten der Fall sein kann (Fig. 2B).

Bezugszeichenliste

1    Nabe (Rotor)

2A    erste Schaufel

2B    zweite Schaufel

A    erster Winkelsektor

B    zweiter Winkelsektor

**Patentansprüche**

1. Beschaufelter Rotor (1) für eine Gasturbine, mit einer Mehrzahl von über den Umfang verteilten Schaufeln (2A, 2B), wobei die Schaufelverteilung sich aus einer natürlichzahligen Sektorzahl (Z) erster Winkelsektoren (A) und zweiter Winkelsektoren (B) zusammensetzt, wobei in den ersten Winkelsektoren eine erste Schaufelzahl ($N_A$) von ersten Schaufeln (2A) und in den zweiten Winkelsektoren eine hiervon verschiedene zweite Schaufelzahl ($N_B$) von zweiten Schaufeln (2B) angeordnet ist, und wobei die Winkelsektoren sich jeweils über einen Winkelbereich erstrecken, der sich aus 360° dividiert durch die doppelte Sektorzahl ergibt (360°/(2Z)), und wobei jeweils ein erster Winkelsektor beidseitig an einen zweiten Winkelsektor anschließt und umgekehrt, **dadurch gekennzeichnet, dass** die Sektorzahl (Z) ungerade (Z = 2n+1, n=1, 2, 3,...) und/oder größer ist als zwei (Z > 2).

2. Rotor nach Anspruch 1, **dadurch gekennzeichnet, dass** die ersten Schaufeln in den ersten Winkelsektoren und die zweiten Schaufeln in den zweiten Winkelsektoren, wenigstens im Wesentlichen, gleich sind.

3. Rotor nach einem der vorhergehenden Ansprüche, **dadurch gekennzeichnet, dass** die ersten Schaufeln in den ersten Winkelsektoren und/oder die zweiten Schaufeln in den zweiten Winkelsektoren, wenigstens im Wesentlichen, äquidistant verteilt sind.

4. Rotor nach einem der vorhergehenden Ansprüche, **dadurch gekennzeichnet, dass** ein Abstand zwischen einer einem zweiten Winkelsektor benachbarten ersten Schaufel und einer dieser ersten Schaufeln benachbarten zweiten Schaufel, wenigstens im Wesentlichen, der Hälfte der Summe des Abstandes zwischen dieser ersten Schaufel und einer ihr benachbarten ersten Schaufel und des Abstandes zwischen dieser zweiten Schaufel und einer ihr benachbarten zweiten Schaufel entspricht.

5. Rotor nach einem der vorhergehenden Ansprüche, **dadurch gekennzeichnet, dass** die erste und zweite Schaufelzahl sich um eine ungerade ganze Zahl ($\Delta$), insbesondere eins, unterscheiden.

6. Rotor nach einem der vorhergehenden Ansprüche, **dadurch gekennzeichnet, dass** die Sektorzahl gleich drei ist (Z = 3) und die Winkelsektoren jeweils 60° aufweisen.

7. Rotor nach einem der vorhergehenden Ansprüche 1 bis 5, **dadurch gekennzeichnet, dass** die Sektorzahl gleich vier ist (Z = 4) und die Winkelsektoren jeweils 45° aufweisen.

8. Rotor nach einem der vorhergehenden Ansprüche, **dadurch gekennzeichnet, dass** die Schaufeln integral mit einer Nabe (1) ausgebildet sind.

9. Gasturbine, insbesondere Flugtriebwerk, mit wenigstens einem Rotor (1) nach einem der vorhergehenden Ansprüche.

10. Verfahren zum Beschaufeln eines Rotors (1) nach einem der vorhergehenden Ansprüche 1 bis 8, **dadurch ge-**

**EP 2 696 078 B1**

**kennzeichnet, dass** in den ersten Winkelsektoren eine erste Schaufelzahl von ersten Schaufeln und in den zweiten Winkelsektoren eine hiervon verschiedene zweite Schaufelzahl von zweiten Schaufeln angeordnet wird.

## Claims

1. Bladed rotor (1) for a gas turbine, comprising a plurality of circumferentially distributed blades (2A, 2B), the blade distribution consisting of a natural sector number (Z) of first angular sectors (A) and of second angular sectors (B), a first blade number ($N_A$) of first blades (2A) being arranged in the first angular sectors and a second blade number ($N_B$) of second blades (2B), which second blade number is different from said first number, being arranged in the second angular sectors, the angular sectors each extending over an angular range which is produced by dividing 360° by double the sector number (360°/(2Z)), and each first angle sector adjoining on both sides a second angle sector, and vice versa, **characterized in that** the sector number (Z) is an odd number (Z=2n+1, n=1, 2, 3, ...) and/or greater than two (Z>2).

2. Rotor according to claim 1, **characterized in that** the first blades in the first angular sectors and the second blades in the second angular sectors are at least substantially the same.

3. Rotor according to either of the preceding claims, **characterized in that** the first blades in the first angular sectors and/or the second blades in the second angular sectors are distributed at least substantially equidistantly.

4. Rotor according to any of the preceding claims, **characterized in that** a distance between a first blade adjacent to a second angular sector and a second blade adjacent to one of said first blades corresponds at least substantially to half the sum of the distance between said first blade and a first blade adjacent thereto, and of the distance between said second blade and a second blade adjacent thereto.

5. Rotor according to any of the preceding claims, **characterized in that** the first and second blade number differ by an odd integer (Δ), in particular one.

6. Rotor according to any of the preceding claims, **characterized in that** the sector number is equal to three (Z=3) and the angular sectors each include 60°.

7. Rotor according to any of the preceding claims 1 to 5, **characterized in that** the sector number is equal to four (Z=4) and the angular sectors each include 45°.

8. Rotor according to any of the preceding claims, **characterized in that** the blades are formed integrally with a hub (1).

9. Gas turbine, in particular an aircraft engine, comprising at least one rotor (1) according to any of the preceding claims.

10. Method for fixing blades to a rotor (1) according to any of the preceding claims 1 to 8, characterized in thata first blade number of first blades is arranged in the first angular sectors and a second blade number of second blades, which second blade number is different from said first number, is arranged in the second angular sectors.

## Revendications

1. Rotor aubagé (1) de turbine à gaz, comportant une pluralité d'aubes (2A, 2B) réparties sur la circonférence, la répartition des aubes étant composée d'un nombre de secteurs (Z) numérotés naturellement des premiers secteurs angulaires (A) et des seconds secteurs angulaires (B), un premier nombre d'aubes ($N_A$) des premières aubes (2A) étant disposé dans les premiers secteurs angulaires et un second nombre d'aubes ($N_B$) des secondes aubes (2B) différentes du premier nombre d'aubes étant disposé dans les seconds secteurs angulaires, et les secteurs angulaires s'étendant chacun sur une plage angulaire qui résulte de 360° divisés par deux fois le nombre de secteurs (360°/(2Z)), et chaque premier secteur angulaire étant adjacent à un second secteur angulaire des deux côtés et inversement, **caractérisé en ce que** le nombre de secteurs (Z) est impair (Z = 2n + 1, n = 1, 2, 3,...) et/ou supérieur à deux (Z > 2).

2. Rotor selon la revendication 1, **caractérisé en ce que** les premières aubes dans les premiers secteurs angulaires et les secondes aubes dans les seconds secteurs angulaires sont au moins sensiblement identiques.

**3.** Rotor selon l'une des revendications précédentes, **caractérisé en ce que** les premières aubes sont réparties au moins sensiblement de manière équidistante dans les premiers secteurs angulaires et/ou les secondes aubes sont réparties au moins sensiblement de manière équidistante dans les seconds secteurs angulaires.

**4.** Rotor selon l'une des revendications précédentes, **caractérisé en ce qu'**une distance entre une première aube adjacente à un second secteur angulaire et une seconde aube adjacente auxdites premières aubes correspond au moins sensiblement à la moitié de la somme de la distance entre ladite première aube et une première aube adjacente à celle-ci et de la distance entre ladite seconde aube et une seconde aube adjacente à celle-ci.

**5.** Rotor selon l'une des revendications précédentes, **caractérisé en ce que** le premier et le second nombre d'aubes diffèrent par un nombre entier impair ($\Delta$), en particulier d'un.

**6.** Rotor selon l'une des revendications précédentes, **caractérisé en ce que** le nombre de secteurs est égal à trois (Z = 3) et les secteurs angulaires ont chacun 60°.

**7.** Rotor selon l'une des revendications précédentes 1 à 5, **caractérisé en ce que** le nombre de secteurs est égal à quatre (Z = 4) et les secteurs angulaires ont chacun 45°.

**8.** Rotor selon l'une des revendications précédentes, **caractérisé en ce que** les aubes sont intégralement constituées d'un moyeu (1).

**9.** Turbine à gaz, en particulier moteur d'avion, comportant au moins un rotor (1) selon l'une des revendications précédentes.

**10.** Procédé d'aubage d'un rotor (1) selon l'une des revendications précédentes 1 à 8, **caractérisé en ce qu'**un un premier nombre d'aubes des premières aubes est disposé dans les premiers secteurs angulaires et un second nombre d'aubes des secondes aubes différent dudit premier nombre d'aubes est disposé dans les seconds secteurs angulaires.

Fig. 1

Z = 3,
N_A = 10,
N_B = 9

Fig. 2A

A

100%

F

Fig. 2B

A

64%

Z = 2,
N_A = 15,
N_B = 14

F

Fig. 2C

A

62%

F

Fig. 2D

A

65%

Z = 4,
N_A = 8,
N_B = 7

F

**IN DER BESCHREIBUNG AUFGEFÜHRTE DOKUMENTE**

**In der Beschreibung aufgeführte Patentdokumente**

- EP 1580400 A1
- WO 2004111391 A1